# EUROPÄISCHE PATENTSCHRIFT

(11) **EP 2 379 260 B1**
(45) Veröffentlichungstag und Bekanntmachung des Hinweises auf die Patenterteilung: **25.03.2015**
(21) Anmeldenummer: 09796974.5
(22) Anmeldetag: 24.12.2009
(51) Int. Cl.: B23B 27/16

(54) **WERKZEUG FÜR DIE SPANENDE BEARBEITUNG, INSBESONDERE LANGDREHWERKZEUG**
MACHINING TOOL, PARTICULARLY TOOL FOR LONGITUDINAL TURNING
OUTIL POUR USINAGE PAR ENLÈVEMENT DE COPEAUX, EN PARTICULIER OUTIL POUR TOURNAGE LONGITUDINAL

(30) Priorität: 07.01.2009 DE 102009004631; 17.06.2009 DE 202009008546 U
(43) Veröffentlichungstag der Anmeldung: 26.10.2011
(73) Patentinhaber: Hartmetall-Werkzeugfabrik Paul Horn GmbH, 72072 Tübingen (DE)
(72) Erfinder: OETTLE, Matthias, 78661 Wellendingen (DE); RUOFF, Uli, 72144 Dusslingen (DE)
(74) Vertreter: Witte, Weller & Partner Patentanwälte mbB
(86) Internationale Anmeldenummer: PCT/EP2009/009275
(87) Internationale Veröffentlichungsnummer: WO 2010/078948

(56) Entgegenhaltungen:
- WO-A1-02/24387
- DE-A1- 3 301 191
- JP-A- 9 262 706
- SU-A1- 770 667
- SU-A1- 1 364 399
- US-A- 2 598 581
- US-A- 3 137 918
- US-A- 4 202 651

## Beschreibung

Die vorliegende Erfindung betrifft ein Werkzeug für die spanende Bearbeitung eines Werkstücks mit einem Werkzeugkörper gemäß dem Oberbegriff des Anspruchs 1 und dem Oberbegriff des Anspruchs 11, einem Schneidwerkzeug und Befestigungsmitteln zum Befestigen des Schneidwerkzeugs in einer Aufnahmevertiefung des Werkzeugkörpers, wobei das Schneidwerkzeug eine Schneide und eine durchgängige Schneidwerkzeugbohrung aufweist und wobei der Werkzeugkörper eine durchgängige, in die Aufnahmevertiefung mündende Werkzeugkörperbohrung aufweist. Die vorliegende Erfindung betrifft insbesondere ein Langdrehwerkzeug.

Ein beispielhaftes Werkzeug ist aus der JP 09262706 A bekannt.

Bei bekannten Werkzeugen dieser Art wird das Schneidwerkzeug, beispielsweise eine Schneidplatte, dadurch in der Aufnahmevertiefung des Werkzeugkörpers befestigt, dass in der Werkzeugkörperbohrung ein Innengewinde vorgesehen ist. In dieses Innengewinde greift eine Befestigungsschraube mit einem korrespondierenden Außengewinde ein, die von außen zunächst durch die Schneidwerkzeugbohrung im Schneidwerkzeug und dann in die Werkzeugkörperbohrung eingreift und dann fest angeschraubt wird.

Bei Langdrehautomaten, bei denen derartige Werkzeuge, sogenannte Langdrehwerkzeuge, häufig eingesetzt werden, ist jedoch oft wenig Platz vorhanden, um das Schneidwerkzeug, welches ein Verschleißteil ist und häufiger gewechselt werden muss, auszuwechseln, während der Werkzeugkörper in die Werkzeugmaschine eingespannt bleibt. Da die Schraube, mit der das Schneidwerkzeug an dem Werkzeugkörper befestigt ist, bei den bekannten Werkzeugen jedoch nur von einer Seite zugänglich ist, muss folglich zum Wechseln des Schneidwerkzeugs oftmals das gesamte Werkzeug aus der Werkzeugmaschine ausgebaut und nach dem Schneidwerkzeugwechsel wieder eingebaut werden. Dies ist umständlich und führt zu hohen Rüstzeiten und soll daher erfindungsgemäß vermieden werden.

Ein Werkzeug, bei dem die Befestigungsmittel zum Befestigen des Schneidwerkzeugs an einem Werkzeugkörper von zwei gegenüberliegenden Seiten aus zugänglich sind und bei dem das oben geschilderte Problem grundsätzlich bereits gelöst ist, ist aus der WO 2003/074217 bekannt. Dort wird zur Befestigung des Schneidwerkzeugs an dem Werkzeugkörper ein spezielles Befestigungselement verwendet, das an seinem vorderen Ende spezielle schraubenförmige Spannflügel aufweist, die mit entsprechenden Stützflügeln innerhalb der Schneidwerkzeugbohrung nach Art eines Gewindes zusammenwirken. Durch Einschrauben dieses Befestigungselements in die Schneidwerkzeugbohrung wird dabei das Schneidwerkzeug an dem Werkzeugkörper befestigt, wobei jedoch das Befestigungselement zum Festschrauben bzw. Lösen von beiden Seiten aus mittels unterschiedlicher Schlüssel gedreht werden muss. Die Verwendung unterschiedlicher Schlüssel ist umständlich und daher als Nachteil in der Handhabung dieses Werkzeugs zu sehen.

In der Deutschen Patentanmeldung 10 2007 063 199.7-14 (Anmeldetag 19.12.2007) ist ein Werkzeug beschrieben, bei dem das geschilderte Problem der Zugänglichkeit der Befestigungsmittel von zwei gegenüberliegenden Seiten ebenfalls grundsätzlich gelöst ist. Zusätzlich besteht hier der Vorteil, dass das Festschrauben bzw. Lösen der Befestigungsmittel von beiden Seiten aus mittels der gleichen Schlüssel erfolgen kann. Die Befestigungsmittel sind hier durch eine Spannschraube und ein Spannbuchse realisiert. Damit die Spannbuchse beim Einschrauben der Spannschraube nicht gegengehalten werden muss und sich nicht verdreht, ist als Verdrehsicherung insbesondere ein separater Sicherungsbolzen vorgesehen.

Weitere derartige Werkzeuge sind aus der JP 09 262706 A, der DE 33 01 191 A1, der WO 02/24387 A1 und der SU 770 667 A1 bekannt. Die in diesen Druckschriften gezeigten Werkzeuge weisen jedoch wiederum den Nachteil auf, dass das Festschrauben bzw. Lösen der Befestigungsmittel nicht unabhängig von jeder Seite erfolgen kann. Dies eröffnet wiederum das Problem der mangelnden Zugänglichkeit der Befestigungsmittel in besonders engen Einbausituationen.

Der vorliegenden Erfindung liegt die Aufgabe zugrunde, ein Werkzeug dieser Art mit einem austauschbaren Schneidwerkzeug weiter zu verbessern, so dass ein Anziehen bzw. Lösen der Befestigungsmittel von unterschiedlichen Seiten leichter ermöglicht wird, bei dem die Befestigungsmittel einfacher ausgestaltet sind und bei dem, unabhängig von welcher Seite aus die Befestigungsmittel angezogen bzw. gelöst werden, immer dasselbe Hilfswerkzeug benutzt werden kann.

Diese Aufgabe wird erfindungsgemäß, ausgehend von dem eingangs genannten Werkzeug, dadurch gelöst, dass die Befestigungsmittel eine mit einem Innengewinde versehene Spannbuchse und eine mit einem mit dem Innengewinde der Spannbuchse korrespondierenden Außengewinde versehene Spannschraube aufweisen, und dass die Spannschraube wahlweise sowohl durch die Schneidwerkzeugbohrung hindurch in die Werkzeugkörperbohrung einsetzbar und mit der Spannbuchse verschraubbar ist als auch von der gegenüberliegenden Seite durch die Werkzeugkörperbohrung hindurch in die Schneidwerkzeugbohrung einsetzbar und mit der Spannbuchse verschraubbar ist, und dass Verdrehsicherungsmittel vorgesehen sind, welche ein Verdrehen der Spannbuchse um ihre Längsachse beim Verschrauben und Lösen mittels der Spannschraube verhindern, wobei die Verdrehsicherungsmittel durch eine Kegelfläche an der Spannbuchse und/oder eine Kegelfläche am Spannschraubenkopf gebildet sind, welche zumindest einem Teil der Werkzeugkörperbohrung und/oder der Schneidwerkzeugbohrung angepasst sind.

Die oben genannte Aufgabe wird dadurch vollständig gelöst.

Der Erfindung liegt dabei der Gedanke zugrunde, das Werkzeug und insbesondere die Befestigungsmittel so auszugestalten, dass sowohl die Spannbuchse als auch die Spannschraube von beiden Seiten aus in die Schneidwerkzeugbohrung bzw. die Werkzeugkörperbohrung eingesteckt werden kann.

Je nachdem, wie die Befestigungsmittel bei in die Werkzeugmaschine eingespanntem Werkzeug besser zugänglich sind, um die Befestigungsmittel zum Schneidwerkzeugwechsel zu lösen und anschließend wieder anzuziehen, wird die Spannschraube entweder durch die Schneidwerkzeugbohrung hindurch in die Werkzeugkörperbohrung eingesetzt und mit der Spannbuchse verschraubt oder von der gegenüberliegenden Seite durch die Werkzeugkörperbohrung hindurch in die Schneidwerkzeugbohrung eingesetzt und mit der Spannbuchse verschraubt. Im Gegensatz zu der aus der WO 2003/074217 bekannten Lösung wird somit unabhängig davon, auf welcher Seite die Spannschraube sitzt, immer nur ein und dasselbe Hilfswerkzeug zum Wechseln des Schneidwerkzeugs benötigt.

Die erfindungsgemäß verwendeten Befestigungsmittel sind ferner sehr einfach und damit kostengünstig herzustellen. Komplizierte und damit teuer herzustellende Stützflügel, wie sie in der WO 2003/074217 verwendet werden, entfallen, so dass das Schneidwerkzeug, welches erfindungsgemäß verwendet werden kann, deutlich kostengünstiger herzustellen ist.

Ferner sind erfindungsgemäß Verdrehsicherungsmittel vorgesehen, welche ein Verdrehen der Spannbuchse um ihre Längsachse beim Verschrauben und Lösen mittels der Spannschraube verhindern. Die Spannschraube kann somit mit der Spannbuchse direkt verschraubt werden, ohne dass zusätzlich ein Gegenhalten der Spannbuchse erforderlich ist. Das Werkzeug muss somit nur auf der Seite zugänglich sein, auf der die Spannschraube eingeschraubt wird.

Die Verdrehsicherungsmittel sind vorliegend durch eine Kegelfläche an der Spannbuchse und/oder an der Spannschraube, insbesondere an deren Kopf, gebildet, die hier zumindest einem Teil der Werkzeugkörperbohrung und/oder der Schneidwerkzeugbohrung angepasst ist. Durch diese Kegelflächen und korrespondierende angefaste Flächen an der Schneidwerkzeugbohrung und der Werkzeugkörperbohrung kann, wie beschrieben, eine hohe Flächenpressung erreicht und ein Verdrehen der Spannbuchse oder der Spannschraube verhindert werden. Wird also die Spannschraube angezogen, so wird die Kegelfläche der Spannbuchse, je nach Zusammenbauweise, entweder gegen die Kegelfläche der Werkzeugkörperbohrung oder die Kegelfläche der Schneidwerkzeugbohrung gepresst und dadurch gehemmt. Es ist ebenso denkbar, dass die Spannbuchse angezogen wird, wodurch dann die Spannschraube entsprechend gegen die Kegelfläche der Werkzeugkörperbohrung oder die Kegelfläche der Schneidwerkzeugbohrung gepresst und dadurch gehemmt wird. Diese Art der Verdrehsicherungsmittel ist sehr einfach und kostengünstig herstellbar.

Erfindungsgemäß ist kein zusätzliches, separates Verdrehsicherungsmittel, wie etwa ein Sicherungsbolzen, notwendig. Dies vereinfacht nicht nur die Handhabung und beschleunigt den Auswechselvorgang des Schneidwerkzeugs zusätzlich, sondern erlaubt auch die Realisierung eines schmaleren Werkzeugkörpers, da hier keine Sicherungsbohrung mehr vorgesehen sein muss, in welche der Sicherungsbolzen eingesteckt wird. Die Verdrehsicherungsmittel sind vorliegend somit direkt in die Befestigungsmittel integriert.

Eine weitere Möglichkeit zur Realisierung der Verdrehsicherung ist ein Aufrauen einer Fläche an der Spannbuchse, welche in zusammengebautem Zustand an der Schneidwerkzeugbohrung anliegt und wodurch die Reibung zwischen der Spannbuchse und der Schneidwerkzeugbohrung erhöht wird. Andererseits ist auch eine Oberflächenausgestaltung denkbar, die eine hohe Flächenpressung zwischen den anliegenden Flächen der Spannbuchse und der Schneidwerkzeugbohrung ermöglicht. Hierdurch wird ebenfalls ein Verdrehen der Spannbuchse verhindert.

In einer Ausgestaltung ist ein Innengewinde in der Werkzeugkörperbohrung vorgesehen, in welches das Außengewinde der Spannschraube eingreifen kann bzw. mit diesem verschraubt ist. Dadurch ist in einer Ausgestaltung, bei der die Spannschraube durch die Schneidwerkzeugbohrung hindurch in die Werkzeugkörperbohrung eingesetzt und mit dem Innengewinde der Werkzeugkörperbohrung verschraubt ist, die Spannbuchse nicht mehr zwingend notwendig.

Um die Verdrehsicherung der Spannbuchse und den Halt des Schneidwerkzeugs in der Aufnahmevertiefung zusätzlich zu verbessern, ist bevorzugt vorgesehen, dass die Werkzeugkörperbohrung derart angeordnet ist, dass deren Bohrungsachse bei in die Aufnahmevertiefung eingesetztem, aber noch nicht verschraubtem Schneidwerkzeug, geringfügig versetzt zu der Bohrungsachse der Schneidwerkzeugbohrung verläuft.

Beim Anziehen der Spannschraube wird somit das Schneidwerkzeug nicht nur in Richtung der Bohrungsachse der Werkzeugkörperbohrung festgezogen, sondern auch geringfügig in einer Richtung quer zu dieser Achse, bevorzugt in einer Richtung weg von der eingesetzten Schneide und hin zu den Anlageflächen in der Aufnahmevertiefung. Dadurch wird das Schneidwerkzeug noch fester in die Aufnahmevertiefung geklemmt.

Falls die Verdrehsicherungsmittel in der oben beschriebenen Ausgestaltung durch eine Kegelfläche an der Spannbuchse gebildet sind, wird durch die geringfügige Exzentrizität der Bohrungsachse der Werkzeugkörperbohrung und der Bohrungsachse der Schneidwerkzeugbohrung die Kegelfläche mit zusätzlichem Druck an die Schneidwerkzeugbohrung gepresst. Einem Verdrehen der Spannbuchse ist somit zusätzlich entgegengewirkt.

Ferner ist in einer Ausgestaltung vorgesehen, dass die Spannbuchse eine durchgehende Längsbohrung aufweist. Wenn die Spannschraube von der einen Seite durch die Schneidwerkzeugbohrung hindurch in die Werkzeugkörperbohrung eingesetzt wird und mit dem Innengewinde der Werkzeugkörperbohrung verschraubt wird, kann die Spannbuchse über die Spannschraube gezogen werden bzw. auf diese aufgeschraubt werden. Wird die Spannschraube also von der einen Seite durch die Schneidwerkzeugbohrung hindurch in die Werkzeugkörperbohrung eingesetzt und mit dem Innengewinde der Werkzeugkörperbohrung verschraubt, so ist die Spannbuchse nicht mehr zwingend notwendig. Durch die durchgehende Längsbohrung der Spannbuchse kann diese jedoch auch in diesem Fall über die Spannschraube gesteckt werden und damit mitverbaut werden. Die Spannbuchse ist dann auch in den Ausgestaltungen, in denen sie nicht zwingend benötigt wird, "aufgeräumt" und kann nicht verlorengehen.

Dabei ist es in einer Weiterbildung bevorzugt vorgesehen, dass zumindest ein Teil der Längsbohrung der Spannbuchse, insbesondere durch eine Fase, der Form des Spannschraubenkopfes angepasst ist. Dies ermöglicht einen besseren Sitz der Spannbuchse auf der Spannschraube, wenn sie über diese gesteckt wird. Die Spannbuchse ist somit ideal an die Form der Spannschraube angepasst, so dass beim Einschrauben der Spannschraube in die Werkzeugkörperbohrung die Außenfläche der Spannbuchse quasi als Vergrößerung des Spannschraubenkopfes dient und an die Schneidwerkzeugbohrung angepresst wird.

In einer weiteren Ausgestaltung ist bevorzugt vorgesehen, dass die Spannbuchse und die Werkzeugkörperbohrung in eingesetztem Zustand eine NutPassfeder-Verbindung aufweisen. Durch Passfedern an der Spannbuchse und dazugehörige Nuten in der Werkzeugkörperbohrung kann die Spannbuchse in zusammengebautem Zustand formschlüssig in die Werkzeugkörperbohrung eingesetzt werden. Die Nut-Passfeder-Verbindung dient dabei zusätzlich als Verdrehsicherungsmittel. Ein Verdrehen der Spannbuchse um ihre Längsachse ist dadurch ausgeschlossen. Dies bietet vor allem bei hohen Drehmomenten eine einfache und kostengünstige Lösung, um ein Verdrehen der Spannbuchse zu verhindern.

Ferner ist in einer Ausgestaltung vorgesehen, dass der Spannschraubenkopf eine Kegelfläche aufweist, welche zumindest einem Teil der Werkzeugkörperbohrung und/oder der Schneidwerkzeugbohrung angepasst ist. Wenn die Kegelfläche zumindest einem Teil der Schneidwerkzeugbohrung angepasst ist, kann die Spannschraube in dieser Ausgestaltung auch direkt durch die Schneidwerkzeugbohrung hindurch in die Werkzeugkörperbohrung eingeschraubt werden, ohne dass die Spannbuchse über die Spannschraube gesteckt werden muss, um den Spannschraubenkopf damit zu vergrößern. Die Spannschraube kann somit von beiden Seiten in die Werkzeugkörperbohrung eingesetzt werden und schließt im zusammengebauten Zustand optimal mit der Werkzeugkörperbohrung bzw. der Schneidwerkzeugbohrung ab. Unabhängig, von welcher Seite die Spannschraube eingesetzt wird, ist somit ein guter Sitz der Spannschraube und damit insgesamt eine feste Verschraubung garantiert.

Um die Spannschraube anziehen bzw. lösen zu können, ist ferner bevorzugt vorgesehen, dass die Spannschraube stirnseitig einen Werkzeugeingriff aufweist. Dies kann beispielsweise ein Innensechskant für einen Inbusschlüssel oder ein andersartig ausgestalteter Einsatz zum Aufnehmen eines Steckschlüssels, beispielsweise eines Torxschlüssels sein.

Ferner ist in einer Ausgestaltung bevorzugt vorgesehen, dass die Länge der Spannbuchse im Wesentlichen der Dicke des Schneidwerkzeugs entspricht.

Die der Erfindung zugrunde liegende Aufgabe wird ferner, ausgehend von dem eingangs genannten Werkzeug, auch dadurch gelöst, dass die Befestigungsmittel eine mit einem Innengewinde versehene Spannbuchse und eine mit einem mit dem Innengewinde der Spannbuchse korrespondierenden Außengewinde versehene Spannschraube aufweisen, und dass die Werkzeugkörperbohrung ein mit dem Außengewinde der Spannschraube korrespondierendes Innengewinde aufweist, und dass die Spannschraube wahlweise sowohl durch die Schneidwerkzeugbohrung hindurch in die Werkzeugkörperbohrung einsetzbar und mit dem Innengewinde der Werkzeugkörperbohrung verschraubbar ist als auch von der gegenüberliegenden Seite durch die Werkzeugkörperbohrung hindurch in die Schneidwerkzeugbohrung einsetzbar und mit der Spannbuchse verschraubbar ist.

Diese Ausgestaltung bietet ebenfalls die Möglichkeit, das Schneidwerkzeug, je nach Zugänglichkeit, von beiden Seiten aus wechseln zu können. Je nachdem, wie die Befestigungsmittel bei in die Werkzeugmaschine eingespanntem Werkzeug besser zugänglich sind, um die Befestigungsmittel zum Schneidwerkzeugwechsel zu lösen und anschließend wieder anzuziehen, wird die Spannschraube entweder durch die Schneidwerkzeugbohrung hindurch in die Werkzeugkörperbohrung eingesetzt und mit dem Innengewinde der Werkzeugkörperbohrung verschraubt oder von der gegenüberliegenden Seite durch die Werkzeugkörperbohrung hindurch in die Schneidwerkzeugbohrung eingesetzt und mit der Spannbuchse verschraubt. Im Gegensatz zu der aus der WO 2003/074217 bekannten Lösung wird somit unabhängig davon, auf welcher Seite die Spannschraube sitzt, immer nur ein und dasselbe Hilfswerkzeug zum Wechseln des Schneidwerkzeugs benötigt.

In dieser Ausgestaltung ist ein Innengewinde in der Werkzeugkörperbohrung vorgesehen, in welches das Außengewinde der Spannschraube eingreifen kann bzw. welches mit diesem verschraubt ist. Dadurch ist in dem Fall, in dem die Spannschraube durch die Schneidwerkzeugbohrung hindurch in die Werkzeugkörperbohrung eingesetzt und mit dem Innengewinde der Werkzeugkörperbohrung verschraubt ist, die Spannbuchse nicht mehr zwingend notwendig.

Auch bei dieser Ausgestaltung sind die erfindungsgemäß verwendeten Befestigungsmittel ferner sehr einfach und damit kostengünstig herzustellen. Komplizierte und damit teuer herzustellende Stützflügel, wie sie in der WO 2003/074217 verwendet werden, entfallen, so dass das Schneidwerkzeug, welches erfindungsgemäß verwendet werden kann, deutlich kostengünstiger herzustellen ist.

Ferner versteht sich, dass sich die Merkmale der letztgenannten Ausgestaltung des Werkzeugs ebenso mit den Merkmalen kombinieren lassen, welche in den zuvor erläuterten Ausgestaltungen vorgesehen sind und die in den Unteransprüchen definiert sind.

Ebenso sind in einer weiteren Abwandlung der letztgenannten Ausgestaltung Verdrehsicherungsmittel vorgesehen, welche ein Verdrehen der Spannbuchse um ihre Längsachse beim Verschrauben und Lösen mittels der Spannschraube verhindern, wobei die Verdrehsicherungsmittel durch eine Kegelfläche an der Spannbuchse und/oder eine Kegelfläche am Spannschraubenkopf gebildet sind, welche zumindest einem Teil der Werkzeugkörperbohrung und/oder der Schneidwerkzeugbohrung angepasst sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine erste Ausführungsform des erfindungsgemäßen Werkzeugs in zerlegtem Zustand,
- Fig. 2: eine Explosionsdarstellung der ersten Ausführungsform des erfindungsgemäßen Werkzeugs in einer ersten Zusammenbauweise,
- Fig. 3: eine Schnittansicht der ersten Ausführungsform des erfindungsgemäßen Werkzeugs in der ersten Zusammenbauweise in zusammengebautem Zustand,
- Fig. 4: eine Explosionsdarstellung der ersten Ausführungsform des erfindungsgemäßen Werkzeugs in einer zweiten Zusammenbauweise,
- Fig. 5: eine Schnittansicht der ersten Ausführungsform des erfindungsgemäßen Werkzeugs in der zweiten Zusammenbauweise in zusammengebautem Zustand,
- Fig. 6: eine Explosionsdarstellung einer zweiten Ausführungsform des erfindungsgemäßen Werkzeugs in einer ersten Zusammenbauweise,
- Fig. 7: eine Schnittansicht der zweiten Ausführungsform des erfindungsgemäßen Werkzeugs in der ersten Zusammenbauweise in zusammengebautem Zustand,
- Fig. 8: eine Explosionsdarstellung der zweiten Ausführungsform des erfindungsgemäßen Werkzeugs in einer zweiten Zusammenbauweise,
- Fig. 9: eine Schnittansicht der zweiten Ausführungsform des erfindungsgemäßen Werkzeugs in der zweiten Zusammenbauweise in zusammengebautem Zustand,
- Fig. 10: eine Explosionsdarstellung einer dritten Ausführungsform des erfindungsgemäßen Werkzeugs in einer ersten Zusammenbauweise,
- Fig. 11: eine Schnittansicht der dritten Ausführungsform des erfindungsgemäßen Werkzeugs in der ersten Zusammenbauweise im zusammengebauten Zustand,
- Fig. 12: eine Explosionsdarstellung der dritten Ausführungsform des erfindungsgemäßen Werkzeugs in einer zweiten Zusammenbauweise, und
- Fig. 13: eine Schnittansicht der dritten Ausführungsform des erfindungsgemäßen Werkzeugs in der zweiten Zusammenbauweise im zusammengebauten Zustand.

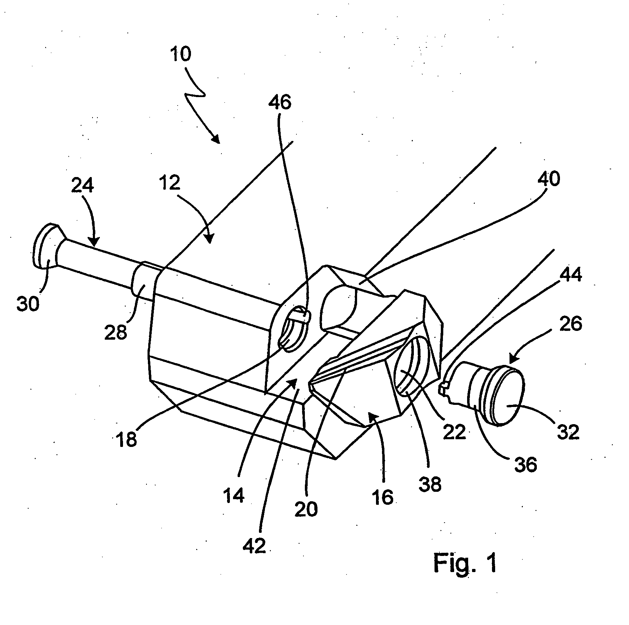

Fig. 1 zeigt eine erste Ausführungsform des erfindungsgemäßen Werkzeugs 10 in zerlegtem Zustand. Erkennbar ist der Werkzeugkörper 12, an dessen vorderem seitlichem Ende eine Aufnahmevertiefung 14 zur Aufnahme eines Schneidwerkzeugs 16 vorgesehen ist. Im vorderen Bereich des Werkzeugkörpers 12 ist quer eine in die Aufnahmevertiefung 14 mündende Werkzeugkörperbohrung 18 vorgesehen.

Das Schneidwerkzeug 16, vorliegend eine Wendeschneidplatte mit zwei Schneiden 20 (die hintere Schneide ist in dieser Darstellung nicht erkennbar), weist zentral eine durchgängige Schneidwerkzeugbohrung 22 auf.

Als Befestigungsmittel zum Befestigen des Schneidwerkzeugs 16 in der Aufnahmevertiefung 14 sind erfindungsgemäß eine Spannschraube 24 und eine Spannbuchse 26 vorgesehen. Die Spannschraube 24 weist dabei ein Außengewinde 28 und einen Spannschraubenkopf 30 auf, welcher hier als Senkkopf ausgebildet ist. Die Spannbuchse 26 weist in dieser Ausgestaltung eine durchgehende Längsbohrung 32 auf, in welcher zumindest teilweise ein Innengewinde 34 (in dieser Darstellung nicht erkennbar) geschnitten ist, welches mit dem Außengewinde 28 der Spannschraube 24 korrespondiert.

Die Spannbuchse 26 weist des Weiteren an ihrer Außenseite eine Kegelfläche 36 auf, welche dem äußeren angefasten Teil 38 der Schneidwerkzeugbohrung 22 angepasst ist. Die Kegelfläche 36 kann dabei beispielsweise aufgeraut sein, um ein Verdrehen der Spannbuchsen 26 um ihre Längsachse beim Verschrauben und Lösen der Spannschraube 24 durch Reibung zwischen der Kegelfläche 36 und dem angefasten Teil 38 der Schneidwerkzeugbohrung 22 zu verhindern.

Die Reibung zwischen den beiden genannten Flächen 36 und 38 wird zusätzlich dadurch verstärkt, dass die Längsachse der Werkzeugkörperbohrung 18 leicht versetzt ist zu der Längsachse der Schneidwerkzeugbohrung 22, wenn das Schneidwerkzeug 16 in die Aufnahmevertiefung 14 eingesetzt, aber noch nicht verschraubt ist. Durch die somit leicht exzentrisch zueinander liegende Schneidwerkzeugbohrung 22 und Werkzeugkörperbohrung 18 wird das Schneidwerkzeug 16 noch etwas in die Aufnahmevertiefung 14 hinein, also zu den Anlageflächen 40 und 42 hin, verschoben.

Als weitere Verdrehsicherung der Spannbuchse 26 sind am vorderen Ende der Spannbuchse 26, welche in die Werkzeugkörperbohrung eingesetzt wird, ein oder mehrere Passfedern 44 (beispielsweise zwei Passfedern) angebracht, welche in dafür vorgesehene Nuten 46 der Werkzeugkörperbohrung 18 eingreifen. Somit ist ein Verdrehen der Spannbuchse 26 gegenüber der Werkzeugkörperbohrung 18 direkt verhindert.

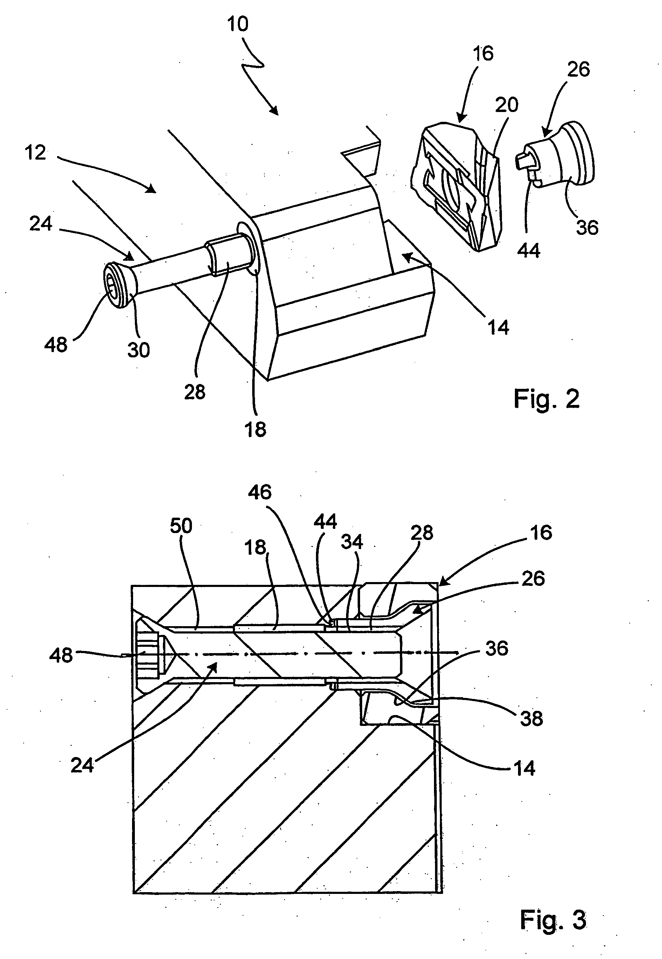

Fig. 2 zeigt die in Fig. 1 dargestellte erste Ausführungsform des erfindungsgemäßen Werkzeugs 10 von der der Aufnahmevertiefung 14 abgewandten Seite. Hierbei ist erkennbar, dass die Spannschraube 24 einen Werkzeugeingriff 48, beispielsweise einen Innensechskant-, Torx- oder Torx-ähnlichen Eingriff, aufweist. Die Spannschraube 24 kann somit in dieser Ausgestaltung, beispielsweise mit Hilfe eines Inbusschlüssels, mit der Spannbuchse 26 verschraubt werden.

Der zusammengebaute Zustand dieser ersten Ausführungsform ist in einer Schnittansicht in Fig. 3 nochmals vergrößert dargestellt. Erkennbar ist darin, dass auf der der Aufnahmevertiefung 14 abgewandten Seite in der Werkzeugkörperbohrung 18 ein Innengewinde 50 vorgesehen ist, durch welches hindurch die Spannschraube 24 zunächst gedreht werden muss.

Wird die Spannschraube 24 also von links, wie in Fig. 3 gezeigt, in die Werkzeugkörperbohrung 18 eingeführt, so wird sie zuerst durch das Innengewinde 50 durchgedreht, dann durch den mittleren Teil der Werkzeugkörperbohrung 18, in welchem kein Gewinde vorgesehen ist, durchgeschoben, und dann auf der Seite des Schneidwerkzeugs 16 mit der Spannbuchse 26 verschraubt.

In zusammengebautem Zustand greift somit das Außengewinde 28 der Spannschraube 24 in das Innengewinde 34 der Spannbuche 26 direkt ein. Das Innengewinde 50 der Werkzeugkörperbohrung 18 hat in dieser Zusammenbauweise, bei der die Spannschraube 24 wie gezeigt von links eingeschraubt ist, keine Bedeutung.

In Fig. 3 wird ferner deutlich, dass die Passfeder(n) 44 der Spannbuchse 26, wie bereits beschrieben, in die dafür vorgesehenen Nuten 46 der Werkzeugkörperbohrung 18 eingreift (eingreifen) und damit ein Verdrehen der Spannbuchse 26 verhindert (verhindern). Dies wird zusätzlich verstärkt durch die Reibung zwischen der Kegelfläche 36 der Spannbuchse 26 und dem angefasten Teil 38 der Schneidwerkzeugbohrung 22. In der Praxis genügt sogar eine der beiden Arten zur Verdrehsicherung, also entweder die Nutpassfederverbindung 44, 46 oder die Flächenpressung bzw. Reibung zwischen den beiden Flächen 36 und 38.

Durch die Verdrehsicherung wird erreicht, dass die Spannschraube 24 mit der Spannbuchse 26 verschraubt werden kann, ohne dass dabei ein Gegenhalten der Spannbuchse 26 zum Befestigen des Schneidwerkzeugs 16 notwendig ist. Dies ist vor allem dann vorteilhaft, wenn auf der Seite des Schneidwerkzeugs 16 bzw. der Spannbuchse 26 kein ausreichender Platz vorhanden ist. Dies ist, wie bereits eingangs beschrieben, bei Langdrehautomaten häufig der Fall, bei welchen das Schneidwerkzeug 16 häufig ausgewechselt werden muss, während der Werkzeugkörper 12 in der Werkzeugmaschine eingespannt bleibt.

Zudem ist jeweils vorteilhaft, dass die Verdrehsicherungsmittel 36, 38, 40, 46 direkt in die Spannbuchse 26 bzw. die Werkzeugkörperbohrung 18 und die Schneidwerkzeugbohrung 22 integriert sind. Somit sind keine zusätzlichen Bauteile, also auch keine zusätzlichen Arbeitsschritte für die Verdrehsicherung der Spannbuchse 26 notwendig.

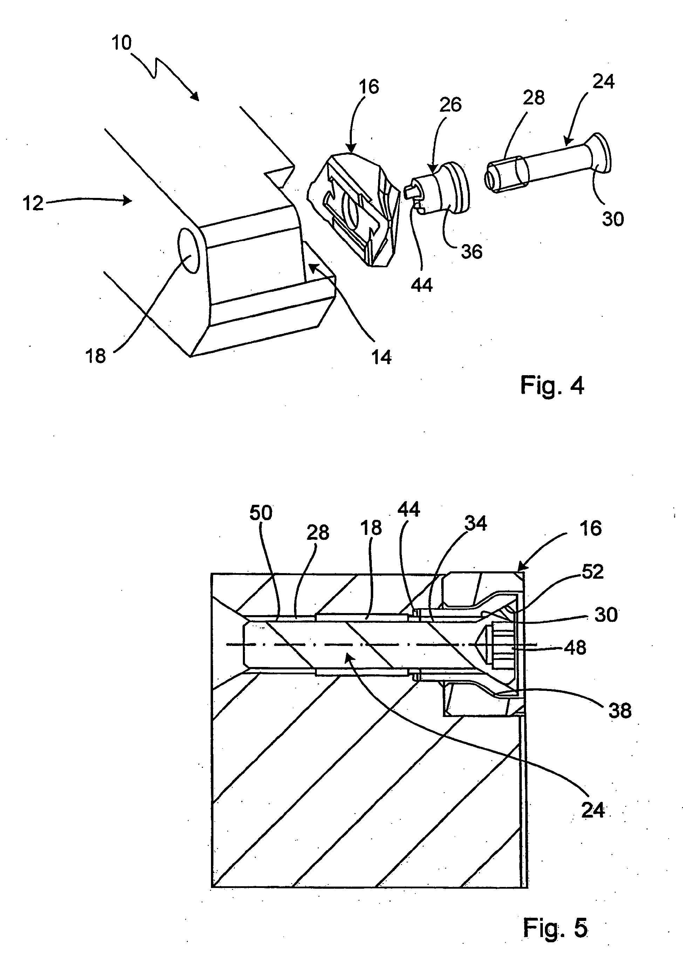

Die erste Art der Zusammenbauweise des erfindungsgemäßen Werkzeugs kommt also dann zum Einsatz, wenn zum Wechseln des Schneidwerkzeugs 16 auf der Seite des Werkzeugs 10, auf der das Schneidwerkzeug 16 angeordnet ist, sehr wenig Platz vorhanden ist. Wenn jedoch auf dieser Seite ausreichend Platz vorhanden ist, besteht alternativ die Möglichkeit, dieselben Bauteile des Werkzeugs 10 in einer zweiten Zusammenbauweise zu verwenden, wie sie in Fig. 4 in dem zerlegten Zustand gezeigt ist. Darin sind gleiche Teile mit gleichen Bezugsziffern versehen.

Wie unschwer erkennbar ist, ist die Spannschraube 24, gegenüber der in Fig. 2 dargestellten ersten Zusammenbauweise, nun auf der rechten Seite (auf der Seite des Schneidwerkzeugs 16) angeordnet.

Wie aus dem in Fig. 5 dargestellten zusammengebauten Zustand dieser zweiten Zusammenbauweise erkennbar ist, ist die Spannschraube 24 zunächst durch die Spannbuchse 26 hindurchgeschraubt. Da die Spannbuchse 26, wie bereits beschrieben (siehe Fig. 1), eine durchgehende Längsbohrung 32 und ein Innengewinde 34 aufweist, welches mit dem Außengewinde 28 der Spannschraube 24 korrespondiert, kann die Spannschraube 24 also auch von der anderen Seite, also der den Passfedern 44 abgewandten Seite der Spannbuchse 26 durch die Spannbuchse 26 hindurchgeschraubt werden. Da das Außengewinde 28 nur am vorderen Teil der Spannschraube 24 angeordnet ist, kann die Spannbuchse nach Überwinden des Außengewindes 28 über die Spannschraube 24 nach hinten bis zu dem Senkkopf 30 durchgeschoben werden. Da die durchgehende Längsbohrung 32 der Spannbuchse 26 eine Fase 52 aufweist, welche mit dem Senkkopf 30 der Spannschraube 24 korrespondiert, kann die Spannbuchse 26 in eingebautem Zustand vollständig über die Spannschraube 24 gestülpt werden.

Die Spannbuchse 26 sitzt somit gegenüber der ersten Zusammenbauweise (vgl. Fig. 3) relativ zum Schneidwerkzeug 16 und der Werkzeugkörperbohrung 18 wieder an der gleichen Stelle.

Das Schneidwerkzeug 16 wird in dieser zweiten Zusammenbauweise dadurch fixiert, dass das Außengewinde 28 der Spannschraube 24 in das Innengewinde 50 der Werkzeugkörperbohrung 18 eingreift und somit die darüber gesteckte Spannbuchse 26 an das Schneidwerkzeug 16 bzw. das Schneidwerkzeug 16 in die Aufnahmevertiefung 14 gepresst wird.

Das erfindungsgemäße Werkzeug 10 bietet also die Möglichkeit, Befestigungselemente variabel und von unterschiedlichen Seiten aus zu verwenden, um damit den vorhandenen Möglichkeiten in Bezug auf die Zugänglichkeit des Werkzeugs Rechnung zu tragen. Die Befestigungsmittel sind dabei sehr einfach ausgestaltet und dadurch auch kostengünstig herzustellen.

Im Gegensatz zu der eingangs beschriebenen deutschen Patentanmeldung 10 2007 063 199.7-14 zeigt die vorliegende Erfindung eine weiter verbesserte Ausgestaltung der Verdrehsicherungsmittel, welche direkt in die bestehenden Bauteile integriert sind und keine zusätzlichen Hilfsmittel benötigen. Da im Gegensatz zu der genannten deutschen Patenanmeldung keine Sicherungsbohrung zum Einstecken eines Sicherungsbolzens in den Werkzeugkörper 12 vorgesehen sein muss, kann der Werkzeugkörper 12 gemäß der vorliegenden Erfindung wesentlich schmäler ausgestaltet werden. Dies bringt zusätzliche Vorteile in der Handhabung des Werkzeugs und eröffnet die Möglichkeit einer zusätzlichen Platzersparnis.

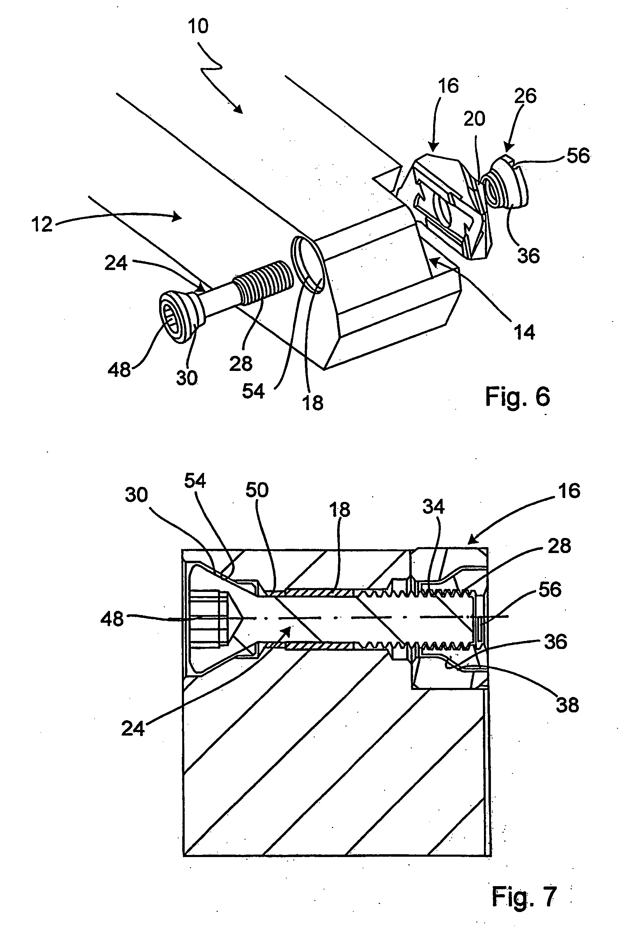

Eine zweite Ausführungsform des erfindungsgemäßen Werkzeugs 10 ist in den Fig. 6 bis 9 gezeigt.

In Fig. 6 und 7 ist die Spannschraube 24, wie bei der in den Fig. 1 bis 3 gezeigten ersten Zusammenbauweise, von links in die Werkzeugkörperbohrung 18 des Werkzeugkörper 12 eingeführt. Die Spannschraube 24 und die Spannbuchse 26 sind hier allerdings gegenüber der ersten Ausführungsform des erfindungsgemäßen Werkzeugs 10 anders ausgestaltet. An der Werkzeugkörperbohrung 18 sind ebenfalls kleinere Veränderungen vorgenommen.

Der Senkkopf 30 der Spannschraube 24 ist hier größer ausgebildet. Dementsprechend ist die Werkzeugkörperbohrung 18 an der der Aufnahmevertiefung 14 abgewandten Seite als Stufenbohrung mit einer Fase 54 ausgebildet, welche dem vergrößerten Senkkopf 30 der Spannschraube 24 angepasst ist.

Die Spannbuchse 26 weist hier bevorzugt nicht, wie in der ersten Ausführungsform des Werkzeugs 10 (vgl. Fig. 1-5), eine durchgehende Längsbohrung 32 auf, sondern ist auf der einen Seite geschlossen (dort kann aber auch ein Sacklochgewinde oder ein Durchgangsgewinde angeordnet sein), wobei hier ein Werkzeugeingriff 56 vorgesehen ist. Dieser Werkzeugeingriff kann als Schlitz oder Kreuzschlitz für einen Schraubendreher ausgebildet sein. Die Werkzeugkörperbohrung 18 weist in dieser Ausführungsform ebenfalls ein Innengewinde 50 auf, durch welches die Spannschraube 24 hindurchgeschraubt werden muss.

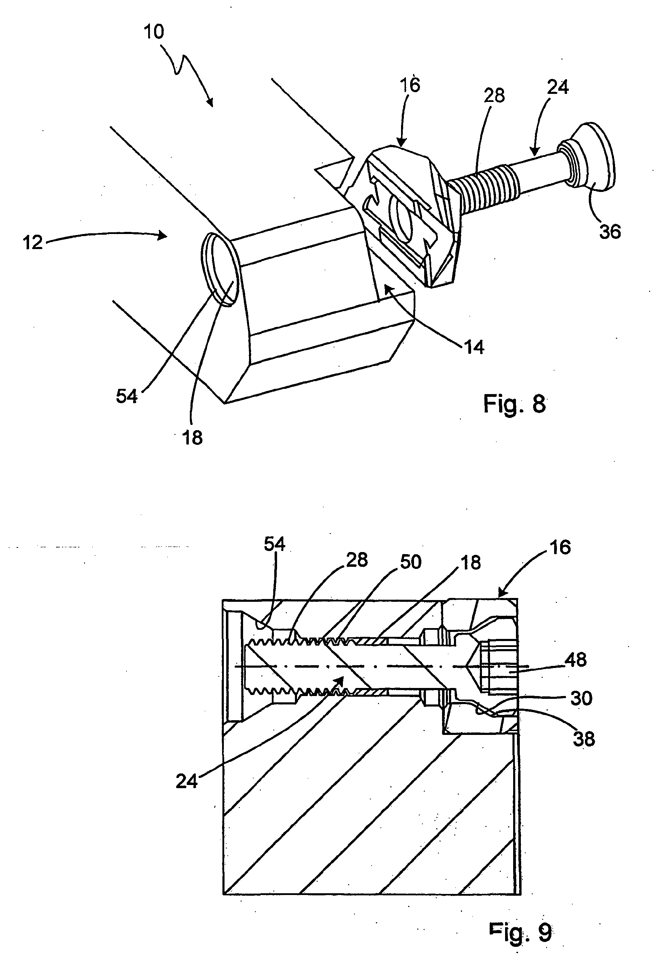

Aus der zweiten Zusammenbauweise der zweiten Ausführungsform, welche in Fig. 8 und 9 gezeigt ist, wird deutlich, weshalb der Senkkopf 30 der Spannschraube 24 in der zweiten Ausführungsform größer ausgebildet ist als in der ersten Ausführungsform. Die Spannbuchse 26 kann nämlich dadurch in der zweiten Zusammenbauweise der zweiten Ausführungsform, bei der die Spannschraube 24 von der Seite des Schneidwerkzeugs 16 in die Werkzeugkörperbohrung 18 eingeschraubt wird, weggelassen werden. Dies ist dadurch möglich, dass der Senkkopf 30 der Spannschraube 24 dort größer ausgebildet ist und damit dem angefasten Teil 38 der Schneidwerkzeugbohrung 22 angepasst ist.

Durch die leichte Exzentrität der Werkzeugkörperbohrung 18 und der Schneidwerkzeugbohrung 22 wird das Schneidwerkzeug 16 wiederum in die Aufnahmevertiefung 14, allerdings jetzt direkt durch den Senkkopf 30 der Spannschraube 24, hineingepresst. Die Spannschraube 24 ist wie bei der zweiten Zusammenbauweise der ersten Ausführungsform, bei der die Spannschraube 24 ebenfalls von rechts in die Werkzeugkörperbohrung 18 eingesetzt ist (vgl. Fig. 4 und 5), mit seinem Außengewinde 28 mit dem Innengewinde 50 der Werkzeugkörperbohrung 18 verschraubt.

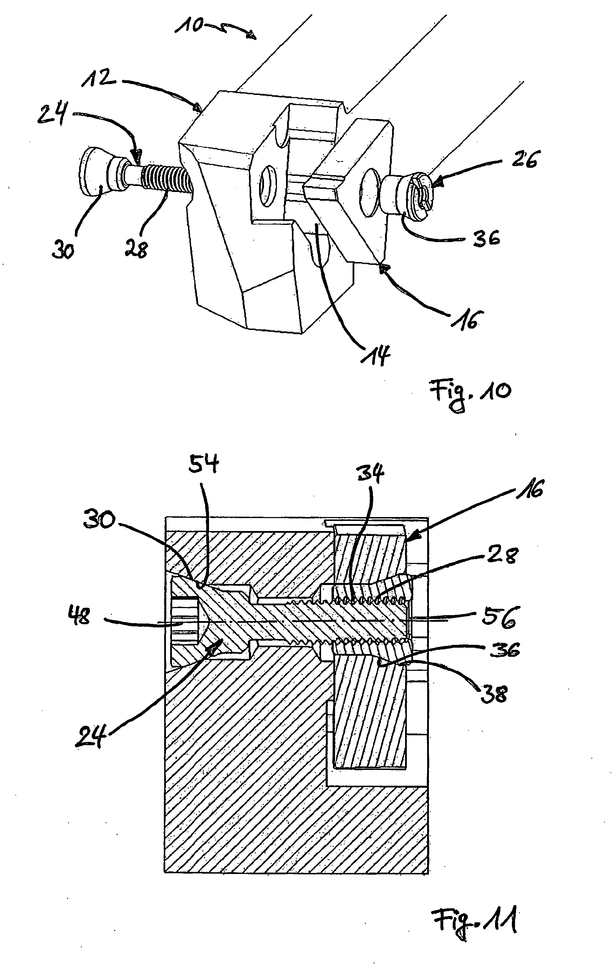

Eine dritte Ausführungsform des erfindungsgemäßen Werkzeugs 10 ist in den Fig. 10 bis 13 gezeigt.

In Fig. 10 und 11 ist die Spannschraube 24 wie in der bereits erläuterten ersten Zusammenbauweise von links in die Werkzeugkörperbohrung 18 des Werkzeugkörpers 12 eingeführt. Die Ausgestaltung der Spannschraube 24 und der Spannbuchse 26 entspricht hier im Wesentlichen der Ausgestaltung, wie sie bereits in der zweiten Ausführungsform des erfindungsgemäßen Werkzeugs gezeigt wurde (vgl. Fig. 6 bis 9). Der Senkkopf 30 der Spannschraube 24 ist hier also wiederum größer ausgebildet, und die Werkzeugkörperbohrung 18 besitzt dementsprechend an der der Aufnahmevertiefung 14 abgewandten Seite eine Stufenbohrung mit einer Phase 54, welche dem vergrößerten Senkkopf 30 der Spannschraube 24 angepasst ist.

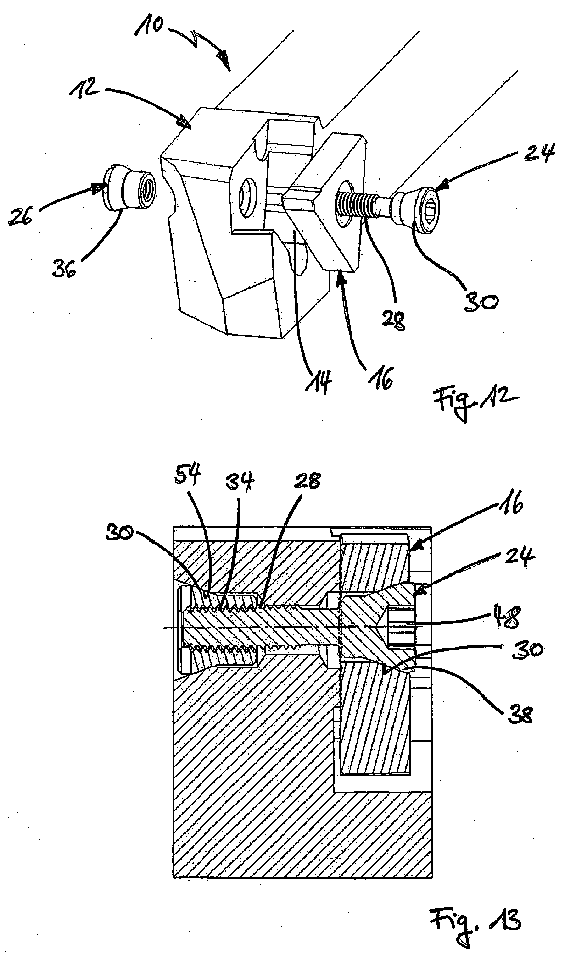

Im Gegensatz zu den ersten beiden Ausführungsformen ist in der dritten Ausführungsform kein Innengewinde 50 in der Werkzeugkörperbohrung 18 vorgesehen. Im Unterschied zu der zweiten Ausführungsform kann die Spannbuchse 26 in der zweiten Zusammenbauweise (Fig. 12 und 13), bei der die Spannschraube 24 von rechts durch das Schneidwerkzeug 16 in die Werkzeugkörperbohrung 18 eingesetzt wird, nicht mehr weggelassen werden. Die Spannbuchse ist in dieser Ausführungsform somit in beiden Zusammenbauweisen zwingend notwendig.

Durch die bereits genannte Ausgestaltung der Spannschraube 24 und der Spannbuchse 26 können die Spannschraube 24 und die Spannbuchse 26 in beiden Zusammenbauweisen eingesetzt werden, d.h. die Spannschraube kann sowohl von links direkt in die Werkzeugkörperbohrung 18 eingesetzt werden, als auch von rechts durch die Schneidwerkzeugbohrung 22 hindurch in die Werkzeugkörperbohrung 18 eingesetzt werden.

Die Verdrehsicherungsmittel sind in der dritten Ausführungsform, gleich wie in den ersten beiden Ausführungsformen, durch die Selbsthemmung der Spannbuchse 26 ausgestaltet. Die Selbsthemmung der Spannbuchse 26 wird dabei, wie oben bereits erwähnt, durch die Flächenpressung bzw. Reibung zwischen der Kegelfläche 36 der Spannbuchse 26 und dem angephasten Teil 38 der Schneidwerkzeugbohrung 22 (erste Zusammenbauweise) bzw. zwischen der Kegelfläche 36 der Spannbuchse 26 und der Phase 54 der Werkzeugkörperbohrung 18 (zweite Zusammenbauweise) verursacht. Die in den ersten beiden Ausführungsformen gezeigten Passfedern 44 der Spannbuchse 26 und die dafür vorgesehenen Nuten 46 der Werkzeugkörperbohrung 18, welche ein Verdrehen der Spannbuchse 26 zusätzlich verhindern sollen, sind hier nicht gezeigt. In der Praxis genügt eine der beiden Arten der Verdrehsicherung, weshalb hier auf die Nutpassfederverbindung verzichtet wurde. Es versteht sich jedoch, dass die Nutpassfederverbindung auch bei dieser Ausführungsform als Verdrehsicherung eingesetzt werden kann.

Insgesamt sind somit drei verschiedene Ausgestaltungen der Spannschraube 24 und der Spannbuchse 26 gezeigt, welche es auf sehr einfache Art und Weise ermöglichen, die Spannschraube 24 jeweils von beiden Seiten in die Werkzeugkörperbohrung 18 einzusetzen. Die Verdrehsicherungsmittel sind dabei in allen drei Ausführungsformen des Werkzeugs 10 sehr einfach realisiert. Ein Sicherungsbolzen, wie in der genannten deutschen Patentanmeldung 10 2007 063 199.7-14 gezeigt, ist in keiner der drei Ausführungsformen mehr notwendig.

Mit Hilfe des erfindungsgemäßen Werkzeugs kann die Spannschraube 24, je nach Platzbedarf, also entweder von links oder von rechts in die Werkzeugkörperbohrung 18 eingeführt und somit das Schneidwerkzeug 16 festgeschraubt werden.

In der ersten Ausführungsform wird dafür eine Spannbuchse 26 verwendet, welche aufgrund ihrer durchgehenden Längsbohrung 32, in der zweiten möglichen Zusammenbauweise (siehe Fig. 4 und 5), über die Spannschraube 24 gesteckt werden kann. In der zweiten Ausführungsform (Fig. 6 bis 9) sind die Spannschraube 24 und die Spannbuchse 26 anders ausgestaltet als in den ersten Ausführungsform. Die Spannschraube 24 weist hierbei einen größeren Senkkopf 30 auf, so dass die Spannbuchse in der zweiten Zusammenbauweise der zweiten Ausführungsform, nämlich beim Einschrauben von rechts, weggelassen werden kann. In der dritten Ausführungsform (Fig. 10 bis 13) ist die Spannschraube 24 und die Spannbuchse 26 gleich wie in der zweiten Ausführungsform ausgestaltet. Die Werkzeugkörperbohrung 18 weist in der dritten Ausführungsform jedoch kein Innengewinde 50 mehr auf, so dass die Spannbuchse 26 auch in der zweiten Zusammenbauweise benötigt wird und im Gegensatz zur zweiten Ausführungsform (vgl. Fig. 8 und 9) beim Einschrauben von rechts nicht weggelassen werden kann.

Es versteht sich, dass unabhängig von der Form des Werkzeugkörpers 12, des Schneidwerkzeugs 16 und der Aufnahmevertiefung 14 der hier gezeigten Ausgestaltungen die hier gezeigten Befestigungsprinzipien beibehalten werden können.

Die vorliegende Erfindung ist nicht auf die gezeigten Ausgestaltungen beschränkt. Eine Vielzahl weiterer Variationen ist denkbar. Insbesondere ist die Erfindung nicht auf die Verwendung bei einem Langdrehwerkzeug, beschränkt. Es versteht sich, dass andere Werkzeuge diese Erfindung verwenden können. Auch die Art, Größe und Anordnung des Schneidwerkzeugs wirkt sich ebensowenig einschränkend auf den Schutzumfang der vorliegenden Erfindung aus, wie die Art, Größe und Ausgestaltung des Werkzeugkörpers.

## Patentansprüche

1. Werkzeug für die spanende Bearbeitung eines Werkstücks mit einem Werkzeugkörper (12), einem Schneidwerkzeug (16) und Befestigungsmitteln zum Befestigen des Schneidwerkzeugs (16) in einer Aufnahmevertiefung des Werkzeugkörpers (12), wobei das Schneidwerkzeug (16) eine Schneide (20) und eine durchgängige Schneidwerkzeugbohrung (22) aufweist und wobei der Werkzeugkörper (12) eine durchgängige, in die Aufnahmevertiefung (14) mündende Werkzeugkörperbohrung (18) aufweist, wobei
die Befestigungsmittel eine mit einem Innengewinde (34) versehene Spannbuchse (26) und eine mit einem mit dem Innengewinde (34) der Spannbuchse (26) korrespondierenden Außengewinde (28) versehene Spannschraube (24) aufweisen, **dadurch gekennzeichnet, dass** die Spannschraube (24) wahlweise sowohl durch die Schneidwerkzeugbohrung (22) hindurch in die Werkzeugkörperbohrung (18) einsetzbar und mit der Spannbuchse (26) verschraubbar ist als auch von der gegenüberliegenden Seite durch die Werkzeugkörperbohrung (18) hindurch in die Schneidwerkzeugbohrung (22) einsetzbar und mit der Spannbuchse (26) verschraubbar ist, und dass Verdrehsicherungsmittel vorgesehen sind, welche ein Verdrehen der Spannbuchse (26) um ihre Längsachse beim Verschrauben und Lösen mittels der Spannschraube (24) verhindern, wobei die Verdrehsicherungsmittel durch eine Kegelfläche (36) an der Spannbuchse (26) und/oder eine Kegelfläche am Spannschraubenkopf (30) gebildet sind, welche zumindest einem Teil der Werkzeugkörperbohrung (18) und/oder der Schneidwerkzeugbohrung (22) angepasst sind.

2. Werkzeug nach Anspruch 1, **dadurch gekennzeichnet, dass** die Werkzeugkörperbohrung (18) ein mit dem Außengewinde (28) der Spannschraube (24) korrespondierendes Innengewinde (50) aufweist.

3. Werkzeug nach Anspruch 2, **dadurch gekennzeichnet, dass** die Spannschraube (24), wenn sie durch die Schneidwerkzeugbohrung (22) hindurch in die Werkzeugbohrung (18) eingesetzt ist, mit dem Innengewinde (50) der Werkzeugkörperbohrung (18) verschraubt ist.

4. Werkzeug nach einem der vorstehenden Ansprüche, **dadurch gekennzeichnet, dass** die Werkzeugkörperbohrung (18) derart angeordnet ist, dass deren Bohrungsachse bei in die Aufnahmevertiefung (14) eingesetztem, aber noch nicht verschraubtem Schneidwerkzeug (16) geringfügig versetzt zu der Bohrungsachse der Schneidwerkzeugbohrung (22) verläuft.

5. Werkzeug nach einem der vorstehenden Ansprüche, **dadurch gekennzeichnet, dass** die Spannbuchse (26) eine durchgehende Längsbohrung (32) aufweist.

6. Werkzeug nach Anspruch 5, **dadurch gekennzeichnet, dass** zumindest ein Teil der Längsbohrung (32) der Spannbuchse (26), insbesondere durch eine Fase (52), der Form des Spannschraubenkopfes (30) angepasst ist.

7. Werkzeug nach einem der vorstehenden Ansprüche, **dadurch gekennzeichnet, dass** die Spannbuchse (26) und die Werkzeugkörperbohrung (18) in eingesetztem Zustand eine Nut-Passfeder-Verbindung (46, 44) aufweisen.

8. Werkzeug nach einem der vorstehenden Ansprüche, **dadurch gekennzeichnet, dass** der Spannschraubenkopf (30) eine Kegelfläche aufweist, welche zumindest einem Teil der Werkzeugkörperbohrung (18) und/oder der Schneidwerkzeugbohrung (22) angepasst ist.

9. Werkzeug nach einem der vorstehenden Ansprüche, **dadurch gekennzeichnet, dass** die Spannschraube (24) stirnseitig einen Werkzeugeingriff (48) aufweist.

10. Werkzeug nach einem der vorstehenden Ansprüche, **dadurch gekennzeichnet, dass** die Länge der Spannbuchse (26) im Wesentlichen der Dicke des Schneidwerkzeugs (16) entspricht.

11. Werkzeug für die spanende Bearbeitung eines Werkstücks mit einem Werkzeugkörper (12), einem Schneidwerkzeug (16) und Befestigungsmitteln zum Befestigen des Schneidwerkzeugs (16) in einer Aufnahmevertiefung des Werkzeugkörpers (12), wobei das Schneidwerkzeug (16) eine Schneide (20) und eine durchgängige Schneidwerkzeugbohrung (22) aufweist und wobei der Werkzeugkörper (12) eine durchgängige, in die Aufnahmevertiefung (14) mündende Werkzeugkörperbohrung (18) aufweist, wobei
die Befestigungsmittel eine mit einem Innengewinde (34) versehene Spannbuchse (26) und eine mit einem mit dem Innengewinde (34) der Spannbuchse (26) korrespondierenden Außengewinde (28) versehene Spannschraube (24) aufweisen, **dadurch gekennzeichnet, dass** die Werkzeugkörperbohrung (18) ein mit dem Außengewinde (28) der Spannschraube (24) korrespondierendes Innengewinde (50) aufweist, und dass die Spannschraube (24) wahlweise sowohl durch die Schneidwerkzeugbohrung (22) hindurch in die Werkzeugkörperbohrung (18) einsetzbar und mit dem Innengewinde (50) der Werkzeugkörperbohrung (18) verschraubbar ist als auch von der gegenüberliegenden Seite durch die Werkzeugkörperbohrung (18) hindurch in die Schneidwerkzeugbohrung (22) einsetzbar und mit der Spannbuchse (26) verschraubbar ist.

12. Werkzeug nach Anspruch 11, **dadurch gekennzeichnet, dass** Verdrehsicherungsmittel vorgesehen sind, welche ein Verdrehen der Spannbuchse (26) um ihre Längsachse beim Verschrauben und Lösen mittels der Spannschraube (24) verhindern, wobei die Verdrehsicherungsmittel durch eine Kegelfläche (36) an der Spannbuchse (26) und/oder eine Kegelfläche am Spannschraubenkopf (30) gebildet sind, welche zumindest einem Teil der Werkzeugkörperbohrung (18).

## Claims

1. A tool for machining a workpiece, comprising a tool body (12), a cutting tool (16) and fastening means for fastening the cutting tool (16) in an accommodating recess of the tool body (12), wherein the cutting tool (16) has a cutting edge (20) and a cutting tool through-bore (22), and wherein the tool body (12) has a tool body through-bore (18) opening into the accommodating recess (14), wherein the fastening means comprise a clamping bush (26) provided with an internal thread (34) and a clamping screw (24) provided with an external thread (28) corresponding with the internal thread (34) of the clamping bush (26),
**characterized in that** the clamping screw (24) may selectively be inserted both through the cutting tool bore (22) into the tool body bore (18) and screwed to the clamping bush (26), as well as from the opposite side through the tool body bore (18) into the cutting tool bore (22) and screwed to the clamping bush (26), and **in that** anti-rotation locking means are provided which prevent a rotation of the clamping bush (26) about the longitudinal axis thereof during screwing and releasing by means of the clamping screw (24), wherein the anti-rotation locking means are formed by a tapered surface (36) on the clamping bush (26) and/or by a tapered surface on the clamping screw head (30), said tapered surfaces being adapted to at least part of the tool body bore (18) and/or the cutting tool bore (22).

2. The tool as claimed in claim 1, **characterized in that** the tool body bore (18) has an internal thread (50) corresponding with the external thread (28) of the clamping screw (24).

3. The tool as claimed in claim 2, **characterized in that** the clamping screw (24), if it is inserted through the cutting tool bore (22) into the tool bore (18), is screwed to the internal thread (50) of the tool body bore (18).

4. The tool as claimed in one of the preceding claims, **characterized in that** the tool body bore (18) is arranged in such a way that the bore axis thereof, when the cutting tool (16) is inserted into the accommodating recess (14) but is not yet screwed down, runs slightly offset from the bore axis of the cutting tool bore (22).

5. The tool as claimed in one of the preceding claims, **characterized in that** the clamping bush (26) comprises a longitudinal through-bore (32).

6. The tool as claimed in claim 5, **characterized in that** at least part of the longitudinal bore (32) of the clamping bush (26) is adapted, in particular by a bevel (52), to the shape of the clamping screw head (30).

7. The tool as claimed in one of the preceding claims, **characterized in that** the clamping bush (26) and the tool body bore (18) have a groove/feather-key connection (46, 44) in the inserted state.

8. The tool as claimed in one of the preceding claims, **characterized in that** the clamping screw head (30) comprises a tapered surface which is adapted to at least part of the tool body bore (18) and/or the cutting tool bore (22).

9. The tool as claimed in one of the preceding claims, **characterized in that** the clamping screw (24) has a tool engagement means (48) at the end face.

10. The tool as claimed in one of the preceding claims, **characterized in that** the length of the clamping bush (26) corresponds substantially to the thickness of the cutting tool (16).

11. A tool for machining a workpiece, comprising a tool body (12), a cutting tool (16) and fastening means for fastening the cutting tool (16) in an accommodating recess of the tool body (12), wherein the cutting tool (16) has a cutting edge (20) and a cutting tool through-bore (22), and wherein the tool body (12) has a tool body through-bore (18) opening into the accommodating recess (14), wherein the fastening means comprise a clamping bush (26) provided with an internal thread (34) and a clamping screw (24) provided with an external thread (28) corresponding with the internal thread (34) of the clamping bush (26),
**characterized in that** the tool body bore (18) comprises an internal thread (50) corresponding with the external thread (28) of the clamping screw (24), and **in that** the clamping screw (24) may selectively be inserted both through the cutting tool bore (22) into the tool body bore (18) and screwed to the internal thread (50) of the tool body bore (18), as well as from the opposite side through the tool body bore (18) into the cutting tool bore (22) and screwed to the clamping bush (26).

12. The tool as claimed in claim 11, **characterized in that** anti-rotation locking means are provided which prevent a rotation of the clamping bush (26) about the longitudinal axis thereof during the screwing and releasing by means of the clamping screw (24), wherein the anti-rotation locking means are formed by a tapered surface (36) on the clamping bush (26) and/or by a tapered surface on the clamping screw head (30), said tapered surfaces being adapted to at least part of the tool body bore (18) and/or the cutting tool bore (22).

## Revendications

1. Outil pour usinage par enlèvement de copeaux d'une pièce, comprenant un corps d'outil (12), un outil de coupe (16) et des moyens de fixation pour fixer l'outil de coupe (16) dans un évidement de réception du corps d'outil (12), l'outil de coupe (16) comprenant une arête vive (20) et un alésage d'outil de coupe traversant (22) et le corps d'outil (12) comprenant un alésage de corps d'outil traversant (18) débouchant dans l'évidement de réception (14),
les moyens de fixation comprenant une douille de serrage (26) pourvue d'un filetage intérieur (34) et une vis de serrage (24) pourvue d'un filetage extérieur (28) correspondant au filetage intérieur (34) de la douille de serrage (26), **caractérisé en ce que** la vis de serrage (24) peut, de manière sélective, aussi bien être insérée dans l'alésage de corps d'outil (18) à travers l'alésage d'outil de coupe (22) et vissée sur la douille de serrage (26) qu'insérée par le côté opposé dans l'alésage d'outil de coupe (22) à travers l'alésage de corps d'outil (18) et vissée sur la douille de serrage (26), et **en ce que** des moyens de fixation anti-rotation sont prévus, lesquels empêchent une rotation de la douille de serrage (26) autour de son axe longitudinal lors du vissage et du desserrage au moyen de la vis de serrage (24), les moyens de fixation anti-rotation étant formés par une surface conique (36) sur la douille de serrage (26) et/ou une surface conique sur la tête de vis de serrage (30), lesquelles sont adaptées à au moins une partie de l'alésage de corps d'outil (18) et/ou de l'alésage d'outil de coupe (22).

2. Outil selon la revendication 1, **caractérisé en ce que** l'alésage de corps d'outil (18) comprend un filetage intérieur (50) correspondant au filetage extérieur (28) de la vis de serrage (24).

3. Outil selon la revendication 2, **caractérisé en ce que** la vis de serrage (24), lorsqu'elle est insérée dans l'alésage d'outil (18) à travers l'alésage d'outil de coupe (22), est vissée sur le filetage intérieur (50) de l'alésage de corps d'outil (18).

4. Outil selon l'une quelconque des revendications précédentes, **caractérisé en ce que** l'alésage de corps d'outil (18) est disposé de telle sorte que son axe d'alésage s'étende de manière légèrement décalée par rapport à l'axe d'alésage de l'alésage d'outil de coupe (22) lorsque l'outil de coupe (16) est inséré mais pas encore vissé dans l'évidement de réception (14).

5. Outil selon l'une quelconque des revendications précédentes, **caractérisé en ce que** la douille de serrage (26) comprend un alésage longitudinal traversant (32).

6. Outil selon la revendication 5, **caractérisé en ce qu'**au moins une partie de l'alésage longitudinal (32) de la douille de serrage (26) est adaptée, en particulier par un biseau (52), à la forme de la tête de vis de serrage (30).

7. Outil selon l'une quelconque des revendications précédentes, **caractérisé en ce que** la douille de serrage (26) et l'alésage de corps d'outil (18) présentent une liaison à rainure et clavette parallèle (46, 44) à l'état inséré.

8. Outil selon l'une quelconque des revendications précédentes, **caractérisé en ce que** la tête de vis de serrage (30) comprend une surface conique, laquelle est adaptée à au moins une partie de l'alésage de corps d'outil (18) et/ou de l'alésage d'outil de coupe (22).

9. Outil selon l'une quelconque des revendications précédentes, **caractérisé en ce que** la vis de serrage (24) comprend du côté frontal une prise d'outil (48).

10. Outil selon l'une quelconque des revendications précédentes, **caractérisé en ce que** la longueur de la douille de serrage (26) correspond essentiellement à l'épaisseur de l'outil de coupe (16).

11. Outil pour usinage par enlèvement de copeaux d'une pièce, comprenant un corps d'outil (12), un outil de coupe (16) et des moyens de fixation pour fixer l'outil de coupe (16) dans un évidement de réception du corps d'outil (12), l'outil de coupe (16) comprenant une arête vive (20) et un alésage d'outil de coupe traversant (22) et le corps d'outil (12) comprenant un alésage de corps d'outil traversant (18) débouchant dans l'évidement de réception (14),
les moyens de fixation comprenant une douille de serrage (26) pourvue d'un filetage intérieur (34) et une vis de serrage (24) pourvue d'un filetage extérieur (28) correspondant au filetage intérieur (34) de la douille de serrage (26), **caractérisé en ce que** l'alésage de corps d'outil (18) comprend un filetage intérieur (50) correspondant au filetage extérieur (28) de la vis de serrage (24), et **en ce que** la vis de serrage (24) peut, de manière sélective, aussi bien être insérée dans l'alésage de corps d'outil (18) à travers l'alésage d'outil de coupe (22) et vissée sur le filetage intérieur (50) de l'alésage de corps d'outil (18) qu'insérée par le côté opposé dans l'alésage d'outil de coupe (22) à travers l'alésage de corps d'outil (18) et vissée sur la douille de serrage (26).

12. Outil selon la revendication 11, **caractérisé en ce que** des moyens de fixation anti-rotation sont prévus, lesquels empêchent une rotation de la douille de serrage (26) autour de son axe longitudinal lors du vissage et du desserrage au moyen de la vis de serrage (24), les moyens de fixation anti-rotation étant formés par une surface conique (36) sur la douille de serrage (26) et/ou une surface conique sur la tête de vis de serrage (30), lesquelles sont adaptées à au moins une partie de l'alésage de corps d'outil (18) et/ou de l'alésage d'outil de coupe (22).
